# EUROPEAN PATENT SPECIFICATION

(11) **EP 1 198 149 B1**
(45) Date of publication and mention of the grant of the patent: **23.07.2003**
(21) Application number: 01303942.5
(22) Date of filing: 30.04.2001
(51) Int. Cl.: H04Q 7/38

(54) **Method for preventing dropped calls in a wireless communication system**
Verfahren zur Verhinderung von Anrufverlusten in einem Funkkommunikationssystem
Procédé de prévention d' appels interrompus dans un système de communication sans fil

(30) Priority: 10.10.2000 US 685231
(43) Date of publication of application: 17.04.2002
(73) Proprietor: LUCENT TECHNOLOGIES INC., Murray Hill, New Jersey 07974-0636 (US)
(72) Inventor: Qi Bi, New Jersey 07950 (US); Raafat, kamel E, New Jersey 07424 (US); Yuen-Yin, Koo L., New Jersey 07960 (US); Eshwar, Pittampalli, New Jersey 07869 (US); Matthew, Thomas, New Jersey 07076 (US)
(74) Representative: Buckley, Christopher Simon Thirsk

(56) References cited:
- US-A- 5 812 540

## Description

This invention relates to methods for allowing a mobile station in a wireless communications system to automatically initiate recovery of a call when the mobile station loses communication with one or more active set base stations.

Mobile communication stations occasionally lose contact with a base station that is providing communication services to the mobile station. When a mobile station stops receiving communications from a base station, the mobile stops transmitting and waits a predetermined time for communications to resume. If communications do not resume, the call is declared lost. In order to re-establish the call, one of the parties involved in the prior communications must recall the other party. This results in user dissatisfaction.

US-A-5812540 describes a system for mitigating an orphan condition in a spread-spectrum communication system that may occur when a mobile station will not perform handoff to a candidate base station, even though the uplink signal from the mobile station to the candidate station is strong enough to support communication. This may occur when the downlink signal received by the mobile station from the candidate base station does not meet the mobile station's preset thresholds for performing handoff, due to environmental features. The system analyzes the environmental conditions to determine when the likelihood of an orphan condition is high, and accordingly adjusts the preset thresholds in the mobile station. Thus, the system increases the probability that the mobile station will perform handoff to an acceptable candidate station, thereby mitigating the chances of an orphan condition.

According to one aspect of this invention there is provided a method as claimed in claim 1.

According to another aspect of this invention there is provided a method as claimed in claim 4.

According to a further aspect of this invention there is provided a method as claimed in claim 6.

The present invention provides a method for a mobile station to automatically initiate recovery of a call when the mobile station loses communications with a base station or a group of base stations. While communicating with one or more base stations, the mobile station monitors signals from other base stations. These signals are measured to determine the strength signals received from base stations within the reception area of the mobile station. When the mobile station loses a traffic channel that is being used to communicate voice or data with one or more base stations, the mobile station attempts to contact to another base station. The base station that the mobile chooses to contact is the base station that has the strongest signal that was previously monitored by the mobile station. When the mobile station makes contact with the new base station, it requests a handoff from the base stations with which contact was lost, to another set of base stations that can provide communication services to the mobile station. In response to the mobile station's request and based on signal strength measurements of other base stations that were included in the mobile station's handoff request. the mobile station is assigned new traffic channels with one or more base stations. The mobile is made aware of this assignment by the base station that the mobile communicated with to request the handoff. The mobile station then communicates with the newly assigned base stations using the newly assigned traffic channels to resume the call. As a result, the loss of a call is prevented not withstanding that the mobile station lost contact with the base stations that were initially providing communication services.

### Brief Description of the Drawings

FIG. 1 illustrates a mobile communications system;
FIG. 2 illustrates call flow for a mobile initiated handoff with handoff evaluation performed at the serving primary base station; and
FIG. 3 illustrates call flow for a mobile initiated handoff with handoff evaluation performed at the selected mobile initiated handoff candidate base station.

### Detailed Description of the Invention

FIG. I illustrates a mobile communication system. Mobile station 10 communicates with base stations 12, 14, and 16. Base stations 12, 14 and 16 are classified as being in an active set because they are all actively providing communication services to mobile station 10 by communicating voice or data over traffic channels. In this example, base station 14 is considered the primary active base station because it is being used to control handoffs and which base stations are members of the active set. Base stations 12, 14, and 16 communicate with mobile switching center 18 which provides communications between the base stations and between the base stations and other communication networks such as public switched telephone network 20 or internet communication network 22. It should be noted that MSC 18 may communicate with other MSCs and thereby provide communication links between base stations throughout the communication network. Additionally, base stations may communicate directly with each other using communication links such as communication link 24. While communicating with the base stations in the active set, mobile station 10 monitors signals, such as pilot signals, from other base stations such as base stations 30, 32, 34, 36 and 38. Base stations 30, 32 and 34 are considered candidate set base stations because the signals monitored by mobile station 10 from each of these base stations indicates that the signal strength received from each of the base stations by the mobile station is sufficient to sustain communications between the mobile station and the candidate base station. In addition, mobile station 10 also monitors the signal strength of signals received from base stations 36 and 38; however, the signal strength received from these base stations is not sufficient to be considered as candidates for communications and therefore these base stations are classified as a neighbor set of base stations.

Mobile station 10 reports the pilot signal strengths it has measured to base stations 12, 14 and 16. Since base station 14 is the primary base station of the active set, it uses the pilot signal strength information to decide which base stations are to remain in the active set and which base stations are to be moved from the candidate set to the active set or the active set to the candidate set. In this way, primary active base station 14 controls handoffs from mobile station 10. The handoff occurs when a candidate station is introduced into the active set and thereby communicates with the base mobile station 10 over a new traffic channel. Based on ongoing pilot signal strengths measurements provided to the primary base station by mobile station 10, base stations are moved in and out of the active set in order to maintain communications with mobile station 10.

When mobile station 10 moves behind an obstacle such as a hill or building, communications with all base stations in the active set may be severed. When communications are severed, mobile station 10 waits a predetermined amount of time or counts a predetermined number of consecutive missed traffic channel frames and then ceases transmitting on the traffic channel. After waiting a predetermined amount of time, mobile station 10 attempts to communicate with the candidate base station having the strongest pilot signal measured by the mobiles. Mobile station 10 communicates with the selected candidate base station over an access channel by sending a mobile initiated handoff (MIHO) message. The MIHO message requests a handoff from one or more active set base stations to one or more candidate set base stations. In addition to providing a handoff request to the selected candidate base station, mobile station 10 also provides updated pilot signal strength measurements of other base stations. Based on this information, either the selected candidate base station or the primary active base station (which is in communication with the selected candidate base station) determines which base stations will be assigned to mobile station 10's new active set. The communications between the base stations are carried out using links such as links 24 which comment directly between base stations and/or links between base station, via mobile switching center(s). The base stations are assigned using existing techniques for executing handoff, in mobile communication systems. These techniques are specified by communication system standards for systems such as CDMA, TDMA, PCS or GSM systems. For example, base stations are selected for addition to the active set based on the pilot signal strength from the base station received at the mobile station and based on the traffic load at the particular base station. Once the base stations are selected for use in the active set. each of the new base stations in the active set allocate one or more traffic channels to service mobile station 10. The selected candidate base station then sends a message to mobile station 10 containing the necessary information to use the newly assigned traffic channels.

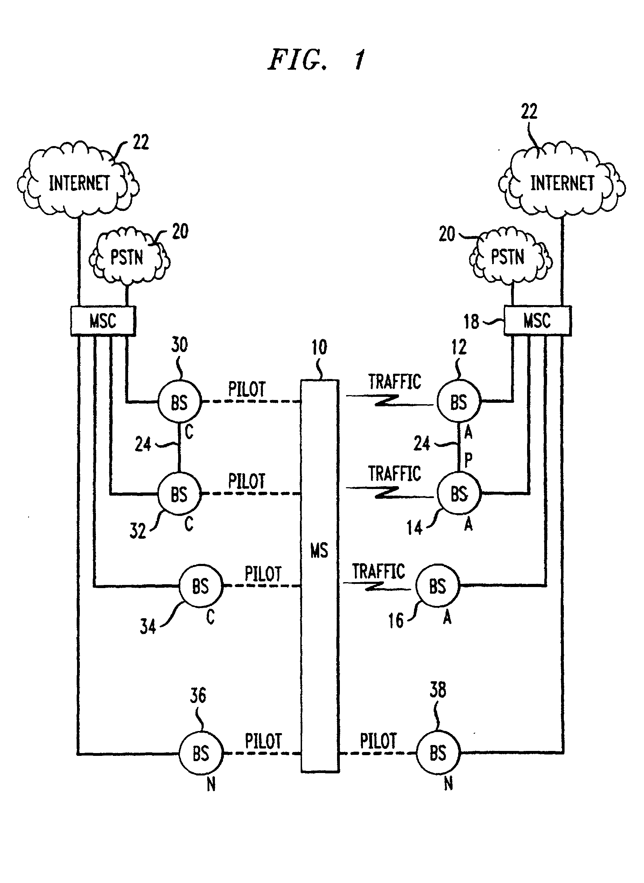

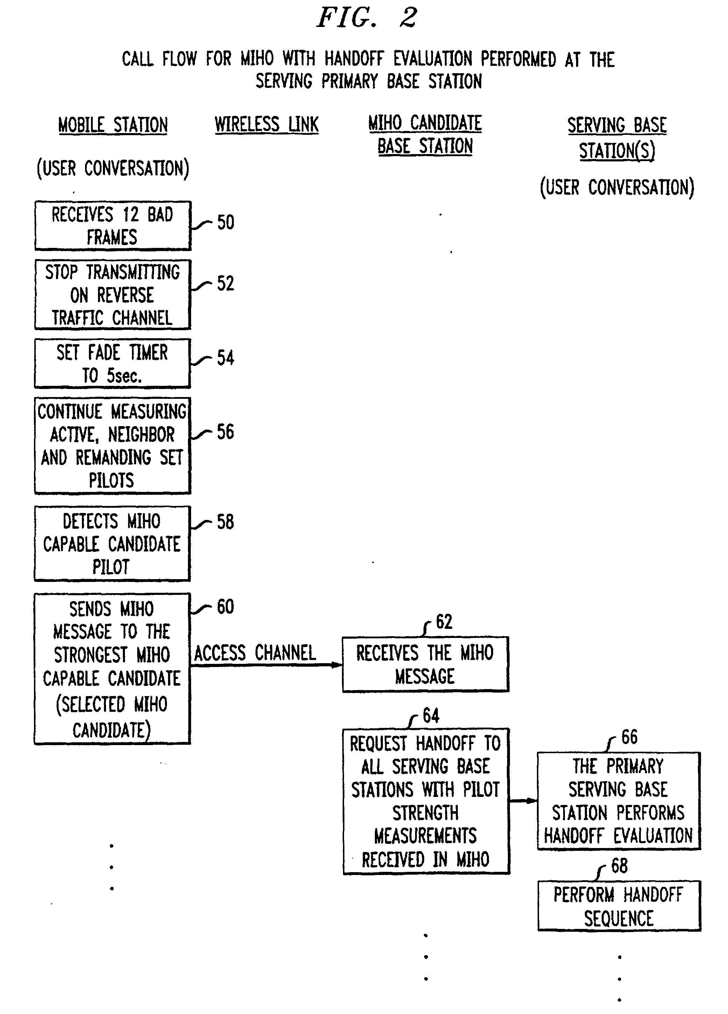

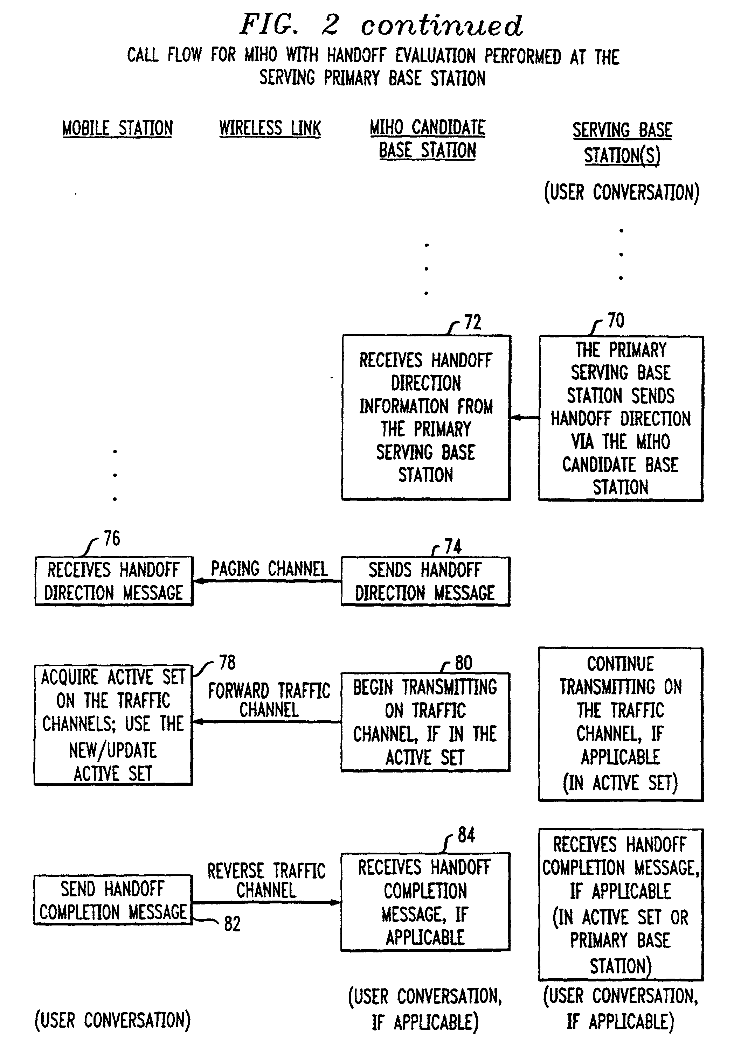

FIG. 2 illustrates a call flow for mobile initiates handoff (MIHO) with handoff evaluation performed at the serving primary base station. In step 50, mobile station 10 receives 12 bad communication frames or an indication that communication has been lost with the active base stations. In step 52, the mobile station stops transmitting on its traffic channel and then in step 54 sets a timer to a time such as 5 seconds. While the timer of step 54 is counting, in step 56 mobile station continues to measure signals such as pilot signals from other base stations that may be in the active set, candidate set or neighbor set. In step 58, the mobile station detects a mobile initiated handoff capable base station. This can be determined by simply monitoring one of the broadcast channels provided by the base stations such as the base station's synchronization channel. If the timer of step 54 has expired, and if a mobile initiated handoff capable base station has been detected in step 58, step 60 is executed where a mobile initiated handoff message is sent to the selected mobile initiated handoff capable base station having the strongest signals measured by mobile station 10 (selected MIHO candidate base station). This request may be sent over a wireless communication channel such as an access channel of the selected MIHO candidate base station. In step 62, the selected MIHO candidate base station receives the mobile initiated handoff request message. In step 64, the selected MIHO candidate base station sends a message to all serving base stations (active set base stations). The handoff request is received in step 66 at the primary serving base station where the primary serving base station, such as base station 14, performs a handoff evaluation. The handoff evaluation as mentioned earlier is based on pilot signal strengths from different base stations as measured by mobile station 10, and on traffic loads at the base stations. In steps 68, the primary serving base station performs a handoff sequence as specified in the standard for the particular communication system. (This may include specifying a new primary servicing base station.) For example, in a CDMA system, the IS2000 standard specifies the handoff sequence. In step 70, the primary serving base station sends handoff directions to the base stations that will provide traffic channels for mobile station 10 and to the selected MIHO candidate base station. In step 72, the selected MIHO candidate base station receives the handoff information from the primary serving base station. In step 74, the selected MIHO candidate base station sends the handoff direction message over a channel such as a paging channel to the mobile station. The handoff direction message included message information that the mobile station will use to communicate with the new active set of base stations and to communicate over the new traffic channels. This information may include, in the CDMA system for example, the timing offsets and Walsh codes that are needed to communicate over the new traffic channels. In step 76, the mobile station receives the handoff direction message. In step 78, the mobile station updates its active set as specified by the handoff direction message and acquires the new traffic channels. In parallel, step 80 is executed where the base stations in the active set begin transmitting on the traffic channel to attempt communications with the mobile station. If the candidate base station was included in the new active set, it also begins transmitting to the mobile station on one or more traffic channels. In step 82 and after acquiring the new traffic channels in step 78, mobile station 10 transmits a handoff completion message over one or more reverse traffic channels to one or more base stations in the active set. In step 84, the base stations in the active set receives the handoff completion message. At this point normal voice or data communications over the traffic channels between the active base stations and the mobile stations continue so that the call is not dropped.

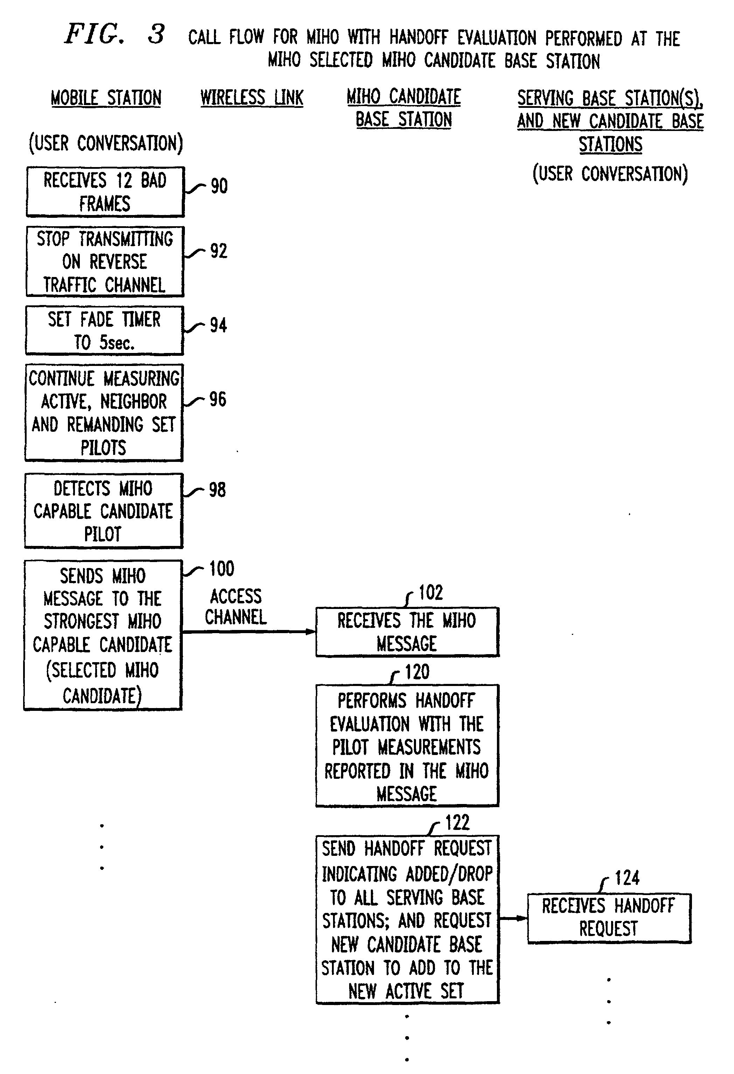

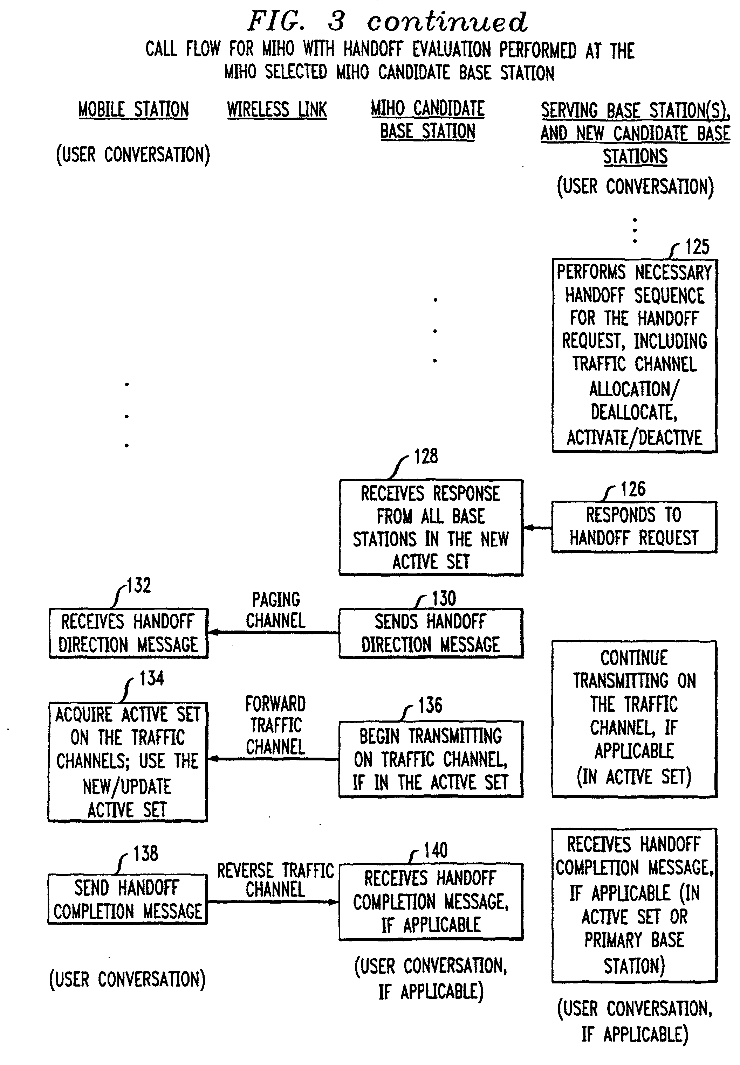

FIG. 3 illustrates a call flow for mobile initiated handoff with handoff evaluation performed at the selected MIHO candidate base station. In step 90, mobile station 10 receives 12 bad communication frames or an indication that communication has been lost with the active base stations. In step 92, the mobile station stops transmitting on its traffic channel and then in step 94 sets a timer to a time such as 5 seconds. While the timer of step 94 is counting, in step 96 mobile station continues to measure signals such as pilot signals from other base stations that may be in the active set, candidate set or neighbor set. In step 98, the mobile station detects a mobile initiated handoff capable base station. This can be determined by simply monitoring one of the broadcast channels provided by the base stations such as the base station's synchronization channel. If the timer of step 94 has expired, and if a mobile initiated handoff capable base station has been detected in step 98, step 100 is executed where a mobile initiated handoff message is sent to the selected mobile initiated handoff capable base station having the strongest signals measured by mobile station 10 (selected MIHO candidate base station). This request may be sent over a wireless communication channel such as an access channel of the selected MIHO candidate base station. In step 102, the selected MIHO candidate base station receives the mobile initiated handoff request message. In step 120, the selected MIHO candidate base station performs the handoff evaluation using the different base stations signal strengths as reported by mobile station 10. In step 122, the handoff request message is transmitted to the base stations in the active set as well as base stations that will be replaced in the active set. In step 124, the primary base station that was in the active set receives the handoff request and in step 125, it performs that necessary handoff sequences as directed by the handoff request of step 122. This sequence is specified in a communication system standard such as the IS2000 standard. These sequences involve informing base stations that will be in the active set to allocate traffic channels from the mobile station and informing base stations that will be removed from the actual set to deactivate traffic channels that were allocated to the mobile station. It may also involve specifying a new primary serving base station. In step 126, the primary base station as well as the other base stations that will be providing traffic channels service to mobile station 10 respond to the handoff request by sending a message to the selected MIHO candidate base station which receives the messages in step 128. In step 130, the selected MIHO candidate base station sends a handoff direction message over a channel such as a paging channel to the mobile station indicating to the mobile station which base stations are in the active set and includes information such as base station offsets and Walsh codes for each of the traffic channels. In step 132, the mobile station receives the handoff direction message with the information necessary to acquire the new traffic channels. Steps 134 and 136 are executed in parallel where in step 136 the new active set of base stations begin transmitting to the mobile station on the traffic channels that were specified in the handoff direction message. In step 134, the mobile station attempts to communicate over the new traffic channels using information provided in the handoff direction message. In step 138, the mobile station sends a handoff completion message over one or more traffic channels to the base stations in the active set. In step 140, the base stations in the active set received the handoff completion message and then normal communications, such as voice or data communications, are provided between the active set base stations and the mobile station.

This method is applicable to other communication systems that have a handoff capability such as, for example, TDMA, PCS and GSM systems.

## Claims

1. A method for allowing a mobile station (10) in a wireless communications system to automatically initiate recovery of a call when the mobile station (10) loses communications with one or more active set base stations (10) **characterized by** the following steps performed at a non-active set base station (30, 32, 34):
receiving a handoff request from a mobile station (10) having detected a loss of communications with one or more active set base stations (12, 14, 16), said handoff request including signal strength measurements of other base stations;
sending a handoff request message to at least one active base station (12, 14, 16) in response to the mobile station's handoff request;
receiving handoff direction information from at least one active set base station (12, 14, 16); and
sending a handoff direction message to the mobile station (10), said message including information that the mobile station (10) will use to communicate with a new active set of base stations.

2. A method as claimed in claim 1, wherein the mobile station's handoff request is received using a non-traffic channel.

3. A method as claimed in claim 1, wherein the at least one base station is a primary serving base station (14).

4. A method for allowing a mobile station (10) in a wireless communications system to automatically initiate recovery of a call when the mobile station loses communications with one or more active base stations (12, 14, 16)
**characterized by** the following steps performed at an active set base station (30, 32, 34):
receiving a handoff request from a mobile station (10) having detected a loss of communications with one or more active set base stations (12, 14, 16), said handoff request including signal strength measurements of other base stations;
identifying at least one base station to be added to an active set (12, 14, 16) associated with the mobile station (10);
sending a message to the at least one base station to be added to the active set (12, 14, 16) indicating that a traffic channel should be allocated for communications between the at least one base station and the mobile station (10);
receiving handoff direction information from the at least one base station to be added to the active set (12, 14, 16); and
sending a handoff direction message to the mobile station (10), said message including information that the mobile station (10) will use to communicate with a new active set of base stations.

5. A method as claimed in claim 4, including the steps of identifying at least one base station to be removed from the active set (12, 14, 16); and
sending a message to the at least on base station to be removed from the active set (12, 14, 16) indicating that a traffic channel should be deallocated for communications between the at least one base station and the mobile station (10).

6. A method for allowing a mobile station (10) in a wireless communications system to automatically initiate recovery of a call when the mobile station (10) loses communications with one or more active base stations (12, 14, 16) **characterized by** the steps performed at the mobile station (10):
detecting a loss of communications with one or more active set base stations (12, 14, 16);
sending a handoff request message to at least one non-active set base station (30, 32, 34), said handoff request message including signal strength measurements of other base stations;
receiving new communication channel information from the at least one non-active set base station (30, 32, 34); and
using the new communication channel information to obtain at least one new communication channel.

## Patentansprüche

1. Verfahren zum Ermöglichen, dass eine Mobilstation (10) in einem drahtlosen Kommunikationssystem automatisch die Wiederherstellung einer Verbindung einleitet, wenn die Mobilstation (10) Kommunikation mit einer oder mehreren Basisstationen (10) einer aktiven Menge verliert, **gekennzeichnet durch** die folgenden, an einer Basisstation (30, 32, 34) einer nicht aktiven Menge durchgeführten Schritte:
Empfangen einer Weiterschaltungsanforderung von einer Mobilstation (10), die einen Kommunikationsverlust mit einer oder mehreren Basisstationen (12, 14, 16) der aktiven Menge erkannt hat, wobei die Weiterschaltungsanforderung Signalstärkemessungen anderer Basisstationen enthält;
Senden einer Weiterschaltungsanforderungsnachricht an mindestens eine aktive Basisstation (12, 14, 16) als Reaktion auf die Weiterschaltungsanforderung der Mobilstation;
Empfangen von Weiterschaltungsrichtungsinformationen von mindestens einer Basisstation (12, 14, 16) der aktiven Menge; und
Senden einer Weiterschaltungsrichtungsnachricht zur Mobilstation (10), wobei die Nachricht Informationen enthält, die von der Mobilstation (10) zum Kommunizieren mit einer neuen aktiven Menge von Basisstationen benutzt werden wird.

2. Verfahren nach Anspruch 1, wobei die Weiterschaltungsanforderung der Mobilstation unter Verwendung eines nicht-Verkehrskanals empfangen wird.

3. Verfahren nach Anspruch 1, wobei die mindestens eine Basisstation eine bedienende Haupt-Basisstation (14) ist.

4. Verfahren zum Ermöglichen, dass eine Mobilstation (10) in einem drahtlosen Kommunikationssystem automatisch die Wiederherstellung einer Verbindung einleitet, wenn die Mobilstation Kommunikation mit einer oder mehreren aktiven Basisstationen (12, 14, 16) verliert, **gekennzeichnet durch** die folgenden, an einer Basisstation (30, 32, 34) einer aktiven Menge durchgeführten Schritte:
Empfangen einer Weiterschaltungsanforderung von einer Mobilstation (10), die einen Kommunikationsverlust mit einer oder mehreren Basisstationen (12, 14, 16) der aktiven Menge erkannt hat, wobei die Weiterschaltungsanforderung Signalstärkemessungen anderer Basisstationen enthält;
Kennzeichnen von mindestens einer Basisstation, die zu einer der Mobilstation (10) zugeordneten aktiven Menge (12, 14, 16) hinzuzufügen ist;
Senden einer Nachricht zu der mindestens einen zur aktiven Menge (12, 14, 16) hinzuzufügenden Basisstation, die anzeigt, dass ein Verkehrskanal für Kommunikation zwischen der mindestens einen Basisstation und der Mobilstation (10) zugeordnet werden sollte;
Empfangen von Weiterschaltungsrichtungsinformationen von der mindestens einen der aktiven Menge (12, 14, 16) hinzuzufügenden Basisstation; und
Senden einer Weiterschaltungsrichtungsnachricht zur Mobilstation (10), wobei die Nachricht Informationen enthält, die von der Mobilstation (10) zum Kommunizieren mit einer neuen aktiven Menge von Basisstationen benutzt werden werden.

5. Verfahren nach Anspruch 4, mit den Schritten des Kennzeichnens von mindestens einer aus der aktiven Menge (12, 14, 16) zu entfernenden Basisstation; und
Senden einer Nachricht zu der mindestens einen aus der aktiven Menge (12, 14, 16) zu entfernenden Basisstation, die anzeigt, dass ein Verkehrskanal für Kommunikationen zwischen der mindestens einen Basisstation und der Mobilstation (10) entzogen werden sollte.

6. Verfahren zum Ermöglichen, dass eine Mobilstation (10) in einem drahtlosen Kommunikationssystem automatisch die Wiederherstellung einer Verbindung einleitet, wenn die Mobilstation (10) Kommunikation mit einer oder mehreren aktiven Basisstationen (12, 14, 16) verliert, **gekennzeichnet durch** die folgenden, an der Mobilstation (10) durchgeführten Schritte:
Erkennen eines Kommunikationsverlusts mit einer oder mehreren Basisstationen (12, 14, 16) der aktiven Menge;
Senden einer Weiterschaltungsanforderungsnachricht zu mindestens einer Basisstation (30, 32, 34) der nicht aktiven Menge, wobei die Weiterschaltungsanforderungsnachricht Signalstärkemessungen anderer Basisstationen enthält;
Empfangen von neuen Kommunikationskanalinformationen von der mindestens einen Basisstation (30, 32, 34) der nicht aktiven Menge; und
Benutzen der neuen Kommunikationskanalinformationen, um mindestens einen neuen Kommunikationskanal zu erhalten.

## Revendications

1. Procédé permettant à une station mobile (10) dans un système de communications sans fil de lancer automatiquement une reprise d'appel après incident quand la station mobile (10) perd la communication avec une ou plusieurs stations de base d'un ensemble actif (10), **caractérisé par** les étapes suivantes exécutées au niveau d'une station de base d'un ensemble non actif (30, 32, 34) :
réception d'une demande de transfert depuis une station mobile (10) ayant détecté une perte de communications avec une ou plusieurs stations de base d'un ensemble actif (12, 14, 16), ladite demande de transfert comportant des mesures de force de signal d'autres stations de base ;
envoi d'un message de demande de transfert à au moins une station de base active (12, 14, 16) en réponse à la demande de transfert de la station mobile ;
réception d'informations de sens de transfert depuis au moins une station de base d'un ensemble actif (12, 14, 16) ; et
envoi d'un message de sens de transfert à la station mobile (10), ledit message comportant des informations que la station mobile (10) utilisera pour communiquer avec un nouvel ensemble actif de stations de base.

2. Procédé selon la revendication 1, dans lequel la demande de transfert de la station mobile est reçue en utilisant un canal non de trafic.

3. Procédé selon la revendication 1, dans lequel l'au moins une station de base est une station de base de desserte principale (14).

4. Procédé permettant à une station mobile (10) dans un système de communications sans fil de lancer automatiquement une reprise d'appel après incident quand la station mobile perd les communications avec une ou plusieurs stations de base actives (12, 14, 16), **caractérisé par** les étapes suivantes exécutées au niveau d'une station de base d'un ensemble actif (30, 32, 34) :
réception d'une demande de transfert depuis une station mobile (10) ayant détecté une perte de communications avec une ou plusieurs stations de base d'un ensemble actif (12, 14, 16), ladite demande de transfert comportant des mesures de force de signal d'autres stations de base ;
identification d'au moins une station de base à ajouter à un ensemble actif (12, 14, 16) associé à la station mobile (10) ;
envoi d'un message à l'au moins une station de base à ajouter à l'ensemble actif (12, 14, 16) indiquant qu'un canal de trafic doit être attribué pour les communications entre l'au moins une station de base et la station mobile (10) ;
réception d'informations de sens de transfert depuis l'au moins une station de base à ajouter à l'ensemble actif (12, 14, 16) ; et
envoi d'un message de sens de transfert à la station mobile (10), ledit message comportant des informations que la station mobile (10) utilisera pour communiquer avec un nouvel ensemble actif de stations de base.

5. Procédé selon la revendication 4, comportant les étapes d'identification d'au moins une station de base à retirer de l'ensemble actif (12, 14, 16) ; et
d'envoi d'un message à l'au moins une station de base à retirer de l'ensemble actif (12, 14, 16) indiquant que l'attribution d'un canal de trafic pour les communications entre l'au moins une station de base et la station mobile (10) doit être supprimée.

6. Procédé permettant à une station mobile (10) dans un système de communications sans fil de lancer automatiquement une reprise d'appel après incident quand la station mobile (10) perd les communications avec une ou plusieurs stations de base actives (12, 14, 16), **caractérisé par** les étapes exécutées au niveau de la station mobile (10) :
détection d'une perte de communications avec une ou plusieurs stations de base d'un ensemble actif (12, 14, 16) ;
envoi d'un message de demande de transfert à au moins une station de base d'un ensemble non actif (30, 32, 34), ledit message de demande de transfert comportant des mesures de force de signal d'autres stations de base ;
réception de nouvelles informations de canal de communication depuis l'au moins une station de base d'un ensemble non actif (30, 32, 34) ; et
utilisation des nouvelles informations de canal de communication afin d'obtenir au moins un nouveau canal de communication.
